# EUROPEAN PATENT APPLICATION

(11) **EP 4 166 728 A1**
(43) Date of publication of application: **19.04.2023**
(21) Application number: 22164963.5
(22) Date of filing: 29.03.2022
(51) Int. Cl.: E03B 3/02, A01G 25/16, E03B 3/03

(54) **RAINWATER COLLECTION SYSTEM**

(30) Priority: 18.10.2021 TR 202116196
(71) Applicant: Bahçeli, Togrul, Basaksehir, Istanbul (TR)
(72) Inventor: Bahçeli, Togrul, Basaksehir, Istanbul (TR)
(74) Representative: Yamankaradeniz, Kemal

(57) **Abstract**

Invention relates to rainwater collection system used in rainwater collection and storing area and providing rainwater collection by means of water contact flap (20) which is activated and opened by rain sensor (50) and closed when rain stops or storing area water level reaches desired level.

## Description

### The Field of the Invention

The invention relates to rainwater collection system used for collecting and storing rainwater.

Invention particularly relates to rainwater collection system providing rainwater collection by means of water contact flap which is activated and opened by water sensor and closed when rain stops or storing area water level reaches desired level.

### Background of the Invention

Today use of potable supply water reaching essential amounts in particular is an important loss in terms of environment and economy. For that reason, collecting, storing rainwater and use thereof in agriculture, houses and industry is an effective method in terms of not only environment and water sources but also economic gaining. Upon technologies developed for reduction of water consumption in the world, every country has specified and ensured spread of utilizing such technologies by regulations, standards or scientific nature guidelines.

In the present art rainwater collection systems are conventionally drainage pipes in hard grounds or building and vicinity of walls in roof, car park and roads, mainly stadiums, shopping centres, buildings. Collected water are stored in underground or on-ground storage areas. Stored water is carried to the are of use via pumps. However, roof material influences both quantity and quality of collected water. For instance, porosity asphalt tiles and rolled roofs are preferred less than coating and smooth steel. Because coarse materials absorb more water and bird excreta. Wooden shingle roof processed with chromate copper arsenate are not good for rainwater yielding. Also in rain water collection systems rain water is collected from open surfaces. Therefore, rainwater is subject to pollution due to contact and so water loss is much more during filtering. Also areas where rain water collection systems can be installed because of structural forms or area enabling installation for user have limited flexibility, and also they are weak or are not appropriate in respect to helping user or in terms of integration with systems that can be needed (such as power generation). For that reason, a need for a system e offering installation and use flexibility enabling integration with aiding systems or systems that can be needed (such as power generation) and minimizing contact without collecting rainwater from open surface is needed.

During search of literature, document numbered TR2021/002938 is encountered as an example. Said document relates to rainwater storing system. Said invention discloses a system providing collection of rainwater from roof and storing it rain tanks. In the said system collection of water is made from roof surface and open surface related thereto and regaining of it.

As a result, the because of existence the said problems mentioned above and inadequacy of solutions, it has been necessary to make a development in the related art.

### Purpose of the Invention

This present invention relates to a rainwater collecting system eliminating above mentioned disadvantages and providing new advantages in the related art.

Primary purpose of the invention is to disclose a rainwater collection system providing rainwater collection by means of water contact flap which is activated and opened by water sensor and closed when rain stops or storing area water level reaches desired level.

Another purpose of the invention is to disclose a rainwater collection system minimizing contact without collecting rainwater from open surface by means of flap opened and closed by rain sensor and reducing rate of pollution arising from contact.

A further purpose of the invention is to disclose a rainwater collection system offering easy to use feature that can be utilized without constituting any obstacle in respect to use purpose and place thanks to flap that can open and close.

Another purpose of the invention is to disclose a rainwater collection system that can be used in agriculture fields for plants without preventing sun light need thanks to flap that can open and close.

Another purpose of the invention is to disclose a rainwater collection system that can be integrated with camera security systems, irrigation systems, soil humidity heat measurement systems, lightening systems, wind turbines as per use area and thus that can generate and store the needed power.

In order to achieve all purposes described above and elicited from detailed description, the invention is a rainwater collection system used in rainwater collecting and storing area and comprises
- A vertically located body,
- Water contact flap collecting rainwater upon opening with movement downward on the body and becoming cylinder upon closing with the upward movement,
- closing arm connected onto water contact flap and opening and closing water contact flap,
- rain sensor detecting rain via opening closing arm and sending signal to opening closing arms to provide opening and closing of water contact flap,
- rainwater flap located inside the body and carrying rainwater collected in water contact flap,
- filter filtering water transmitted through rainwater channel at lower end of rainwater channel,
- water carrying channel located on output of filter and carrying water supplied from rainwater channel to the area of storage,
- turbine located inside water carrying channel and generating electric energy from power of water flowing through water carrying channel,
- electric channel located inside the body and providing electricity connection to rainwater collection system,
- Stored water channel providing carrying of stored rainwater for use.

The structural and characteristic features and all advantages of the invention will be understood better in the figures given below and the detailed description by reference to the figures. Therefore, the assessment should be made based on the figures and taking into account the detailed descriptions.

### Brief Description of the Drawings

**Figure 1****:** Is an illustrative view of rainwater collection system of the invention.
**Figure 2a** is view indicating open position of water contact flap of rainwater collection system of the invention.
**Figure -2b:** is view indicating closing position of water contact flap of rainwater collection system of the invention.
**Figure 2c****:** is view indicating close position of water contact flap of rainwater collection system of the invention.
**Figure 3a** is perspective view indicating open position of water contact flap of rainwater collection system of the invention.
**Figure 3b****:** is a perspective view indicating closing position of water contact flap of rainwater collection system of the invention.
**Figure 3c****:** is a perspective view indicating close position of water contact flap of rainwater collection system of the invention.
**Figure 4****:** Is a sub-view of rainwater collection system of the invention.
**Figure 5****:** Is a view of aiding system part of rainwater collection system of the invention.
**Figure 6****:** Is an illustrative view of rainwater collection system of the invention during use.

### Description of Part References

- **10.**: Body
- **20.**: Water contact flap
- **30.**: Opening closing arm
- **40.**: Support connection
- **50.**: Rain sensor
- **60.**: Rainwater channel
- **70.**: Filter
- **80.**: Water carrying channel
- **81.**: Turbine
- **90.**: Aiding system chamber
- **100.**: Electric channel
- **110.**: Stored water channel

### Detailed Description of the Invention

In this detailed description, the preferred alternatives of rainwater collecting system being subject of the invention have been described in a manner not forming any restrictive effect and only for purpose of better understanding of the matter.

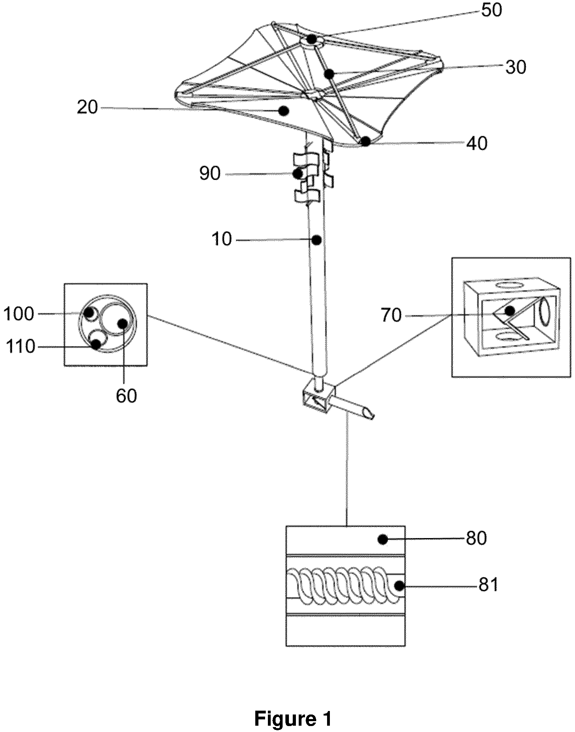

Figure 1 shows illustrative view of rainwater collecting system of the invention. Accordingly, in the most basic form the rainwater collection system comprises a vertically located body (10), water contact flap (20) collecting rainwater upon opening with movement downward on the body (10) and becoming cylinder upon closing with the upward movement, opening-closing arm (30) opening and closing water contact flap (20), support connection (40) providing connection of water contact flap (20) to opening-closing arm (30), rain sensor (50) detecting rain and sending signal to opening-closing arms (30) to provide opening and closing of water contact flap (20), rainwater channel (60) carrying rain water collected in water contact flap (20), filter (70) filtering water transmitted through rainwater channel (60), water carrying channel (80) carrying water supplied from rainwater channel (60) to the area of storage turbine (81) generating electric energy from power of water flowing through water carrying channel (80),aiding system chamber (90) providing integration of aiding systems to rainwater collection system on the body (10) electric channel (100) providing electricity connection to rain water collection system inside the body (10) and also electric connection of aiding systems, stored water channel (110) providing carrying of stored rain water for use.

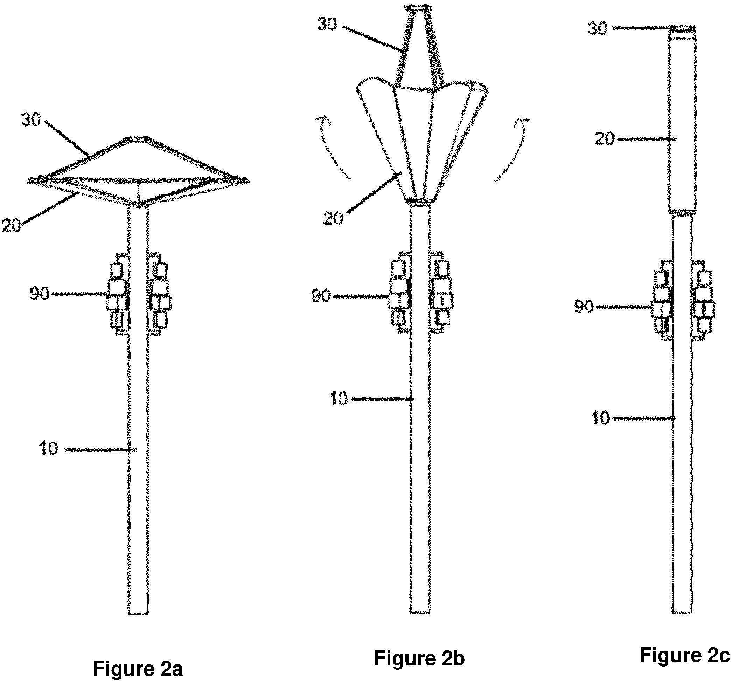

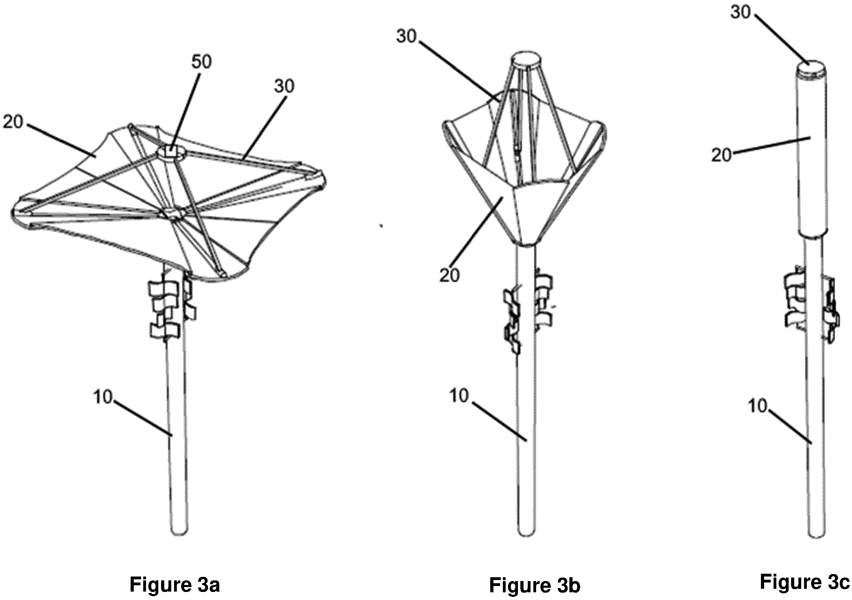

The body (10) constituting carrying part of the rainwater collection system of the invention is located onto ground vertically. As shown in figure 2a, 2b and 2c, water contact flap (20) collecting rainwater upon opening with movement downward on the body (10) and becoming cylinder upon closing with the upward movement is located. Water contact flap (20) is of the structure with upward sides to provide collection of rainwater in inclined way. Figures 3a, 3b and 3c show perspective views of closing position of the water contact flap (20).

Opening closing arm (30) opening and closing water contact flap (20) is located o water contact flap (20). Said opening closing arm (30) is fixed onto the water contact flap (20) by support connection (40). Opening closing arm (30) has at least one rain sensor (50) detecting rain and sending signal to opening-closing arms (30) to provide opening and closing of the water contact flap (20).

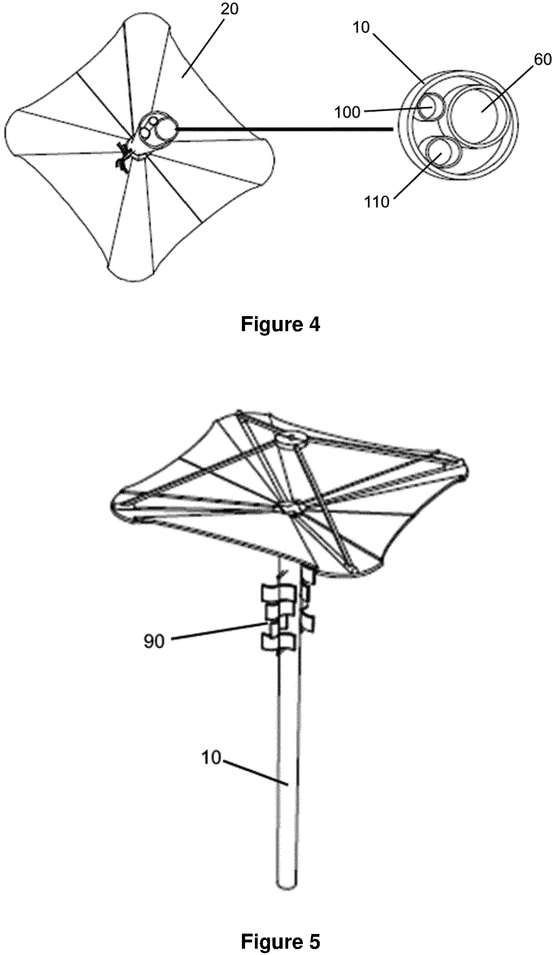

A seen in figure 4, inside the body (10) there are rainwater channel (60) carrying the rainwater collected in water contact flap (20), electric channel (100) providing electric connection to rainwater collecting system inside the body (10) and also electric connection of aiding systems, stored water channel (110) providing carrying of stored rainwater for use.

Said aiding systems are connected to aiding system chamber (90) on the body (10) as shown in figure 5. Said aiding systems can be camera security system, ground humidity heat measurement system, lightening system, wind turbine.

At least one filter (70) filtering the water sent through rainwater channel (60) is located onto lower end of rainwater channel (60) and at least one water carrying channel (80) is located onto output of said filter (70) carrying water transferred from the rainwater channel (60) to the area where it will be stored. Inside the water carrying channel (80) there is a at least one turbine (81) generating electric energy from power of water flowing through water carrying channel (80).

*Working principle of rainwater collection system of the invention is as follow;*

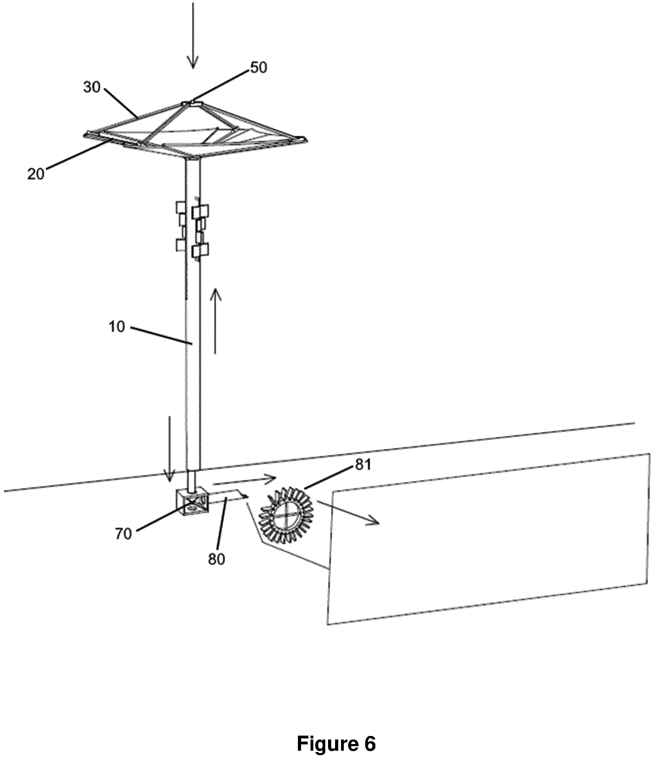

When it starts raining, rain is detected by rain sensor (50) and rain sensor (50) sends signal to opening closing arm (30). Water contact flap (20) moves up and down upon movement of opening -closing arms (30). As shown in figure 6 rainwater is collected by means of water contact flap (20) in open position and enters into rainwater channel (60) inside the body (10). Water carried through rainwater channel (60) passes through the filter (70) and flows to water carrying channel (80) During that time electric energy is generated by turbine (81) in the water carrying channel (80). Rainwater passing through the turbine (81) is transferred to area of storage or common collection channel.

When raining stops or water full level of storage area reaches desired level, water contact flap (20) closes.

When it is intended to use water stored in rainwater collection system for irrigation or any reasons, water taking from storage area is made through stored water channel (110) inside the body (10).

## Claims

1. Rainwater collection system used in rainwater collecting and storing area **characterized *by comprising;***
- a vertically located body (10),
- water contact flap (20) collecting rainwater upon opening with movement downward on the body (10) and becoming cylinder upon closing with the upward movement,
- an opening-closing arm (30) connected onto water contact flap (20) and opening and closing water contact flap (20),
- rain sensor (50) detecting rain on opening closing arm (30) and sending signal to opening closing arms (30) to provide opening and closing of water contact flap (20),
- rainwater flap (60) located inside the body (10) and carrying rainwater collected in water contact flap (20),
- filter (70) filtering water transmitted through rainwater channel (60) at lower end of rainwater channel (60),
- water carrying channel (80) located on output of filter (70) and carrying water supplied from rainwater channel (60) to the area of storage,
- turbine (81) located inside water carrying channel (80) and generating electric energy from power of water flowing through water carrying channel (80),
- electric channel (100) located inside the body (10) and providing electricity connection to rainwater collection system,
- stored water channel (110) providing carrying of stored rainwater for use.

2. The rainwater collection system according to claim 1 **characterized by** comprising support connection (40) providing connection of said water contact flap (20) to opening closing arm (30).

3. The rainwater collection system according to claim 1 **characterized by** comprising aiding system chamber (90) providing integration of aiding systems such as camera security system, ground humidity heat measurement system, lightening system, wind turbine to rainwater collection system on said body (10).

4. The rainwater collection system according to claim 3 **characterized by** comprising an electric channel (100) located inside the body (10) to provide electric connection of said aiding systems.

5. The rainwater collection system according to claim 1 **characterized by** said water contact flap (20) having sides inclined upward to provide collection of rainwater in inclined way.

## Amended claims

### Amended claims in accordance with Rule 137(2) EPC.

1. Rainwater collection system used in rainwater collecting and storing area **characterized *by comprising;***
- a vertically located body (10),
- water contact flap (20) collecting rainwater upon opening with movement downward on the body (10) and becoming cylinder upon closing with the upward movement,
- an opening-closing arm (30) connected onto water contact flap (20) and opening and closing water contact flap (20),
- rain sensor (50) detecting rain on opening closing arm (30) and sending signal to opening closing arms (30) to provide opening and closing of water contact flap (20),
- rainwater channel (60) located inside the body (10) and carrying rainwater collected in water contact flap (20),
- filter (70) filtering water transmitted through rainwater channel (60) at lower end of rainwater channel (60),
- water carrying channel (80) located on output of filter (70) and carrying water supplied from rainwater channel (60) to the area of storage,
- turbine (81) located inside water carrying channel (80) and generating electric energy from power of water flowing through water carrying channel (80),
- electric channel (100) located inside the body (10) and providing electricity connection to rainwater collection system,
- stored water channel (110) providing carrying of stored rainwater for use.

2. The rainwater collection system according to claim 1 **characterized by** comprising support connection (40) providing connection of said water contact flap (20) to opening closing arm (30).

3. The rainwater collection system according to claim 1 **characterized by** comprising aiding system chamber (90) providing integration of aiding systems to the body (10).

4. The rainwater collection system according to claim 3 **characterized by** comprising an electric channel (100) located inside the body (10) to provide electric connection of said aiding systems.

5. The rainwater collection system according to claim 1 **characterized by** said water contact flap (20) having sides inclined upward to provide collection of rainwater in inclined way.
